(19)

Europäisches
Patentamt
European
Patent Office
Office européen
des brevets

(11) **EP 2 293 613 A2**

(12) **EUROPEAN PATENT APPLICATION**
published in accordance with Art. 153(4) EPC

(43) Date of publication:
**09.03.2011 Bulletin 2011/10**

(21) Application number: **09766833.9**

(22) Date of filing: **18.06.2009**

(51) Int Cl.:
*H04W 16/10* (2009.01)      *H04W 72/08* (2009.01)
*H04W 52/34* (2009.01)

(86) International application number:
**PCT/KR2009/003266**

(87) International publication number:
**WO 2009/154408 (23.12.2009 Gazette 2009/52)**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(30) Priority: **18.06.2008   KR 20080057476**

(71) Applicant: **Electronics and Telecommunications
Research Institute
Daejeon 305-700 (KR)**

(72) Inventors:
• **LEE, Heesoo
  Daejeon 305-700 (KR)**
• **CHUNG, Hyun Kyu
  Daejeon 305-700 (KR)**

(74) Representative: **Betten & Resch
Patentanwälte
Theatinerstrasse 8
80333 München (DE)**

(54) **METHOD FOR INTER-CELL INTERFERENCE MANAGEMENT IN CELLULAR SYSTEM**

(57)    Provided is a method for inter-cell interference management in a cellular system. More particularly, provided is a method for inter-cell interference avoidance that may not require signaling between base stations and a complex cell planning.

**FIG. 8**

EP 2 293 613 A2

**Description**

Technique Field

The present invention relates to a method of controlling a base station and a terminal, and more particularly, to a method for inter-cell interference avoidance that may not require signaling between base stations and a complex cell planning.

Background Art

A frequency division multiple access (FDMA)-based and time division multiple access (TDMA)-based cellular system used in a mobile communication network has focused on avoiding interferences. The FDMA-based and TDMA-based cellular system may not use common resources between adjacent cells to thereby obtain a sufficient signal-to-interference ratio, however, there is a limitation in that a capacity of the system is relatively less due to low frequency reuse efficiency. However, since a conventional mobile communication system has mainly provided voice services having an almost uniform data rate, a method of increasing a number of available channels having sufficient signal-to-interference ratio through a power control to thereby increase the capacity of the system has been widely used. Also, there has been developed and used a code division multiple access (CDMA)-based voice system which may reduce a variation width of an interference amount of each channel through interference equalization to enable a relatively numerous channel to receive an appropriate interference, thereby increasing the frequency reuse efficiency.

However, due to a switchover of a voice service having a uniform data rate to a packet service of a variable data rate in the mobile communication services, maintaining appropriate interferences through the interference equalization may not be an optimal method. Also, with development of an orthogonal frequency division multiplexing (OFDM)/orthogonal frequency division multiple access (OFDMA) technique facilitating avoidance of interferences in a cellular field, there arises again a problem of handling interferences between adjacent cells.

Performance of interference avoidance-based schemes in a cellular system depends on how well a transmission power assignment pattern used by the cellular system is in harmony with transmission power assignment patterns used by adjacent cells. Here, the transmission power assignment pattern denotes mapping of a maximum transmission power to each of radio resources available in the cellular system.

A conventional scheme for harmonizing transmission power assignment patterns determines a transmission power assignment pattern of each cell through signaling between base stations.

However, an interface for a mutual communication may not exist between some of the base stations. In a 3rd Generation Partnership Project (3GPP) system, the above interference is referred to as X2 interface.

In particular, X2 interface may not exist between femto cells (home eNB). In this case, a scheme depending on only inter-cell signaling may not be applied, or may be very ineffective.

Another conventional scheme for harmonizing transmission power assignment patterns designs a plurality of transmission power assignment patterns and assigns the designed transmission power assignment patterns to cells by each one.

In the above scheme, how to design the plurality of transmission power assignment patterns and assign these patterns to the cells by each one may exert great influence on a system performance.

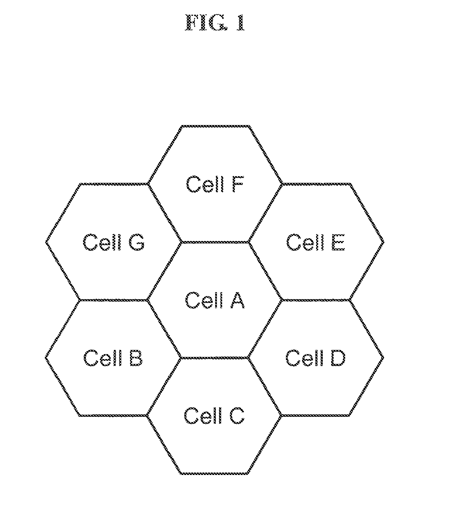

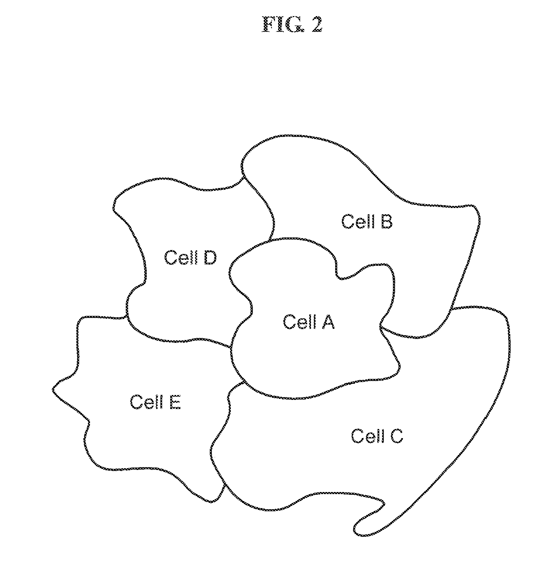

However, as illustrated in FIG. 1, in a regular hexagonal cellular system being comprised of identical sized-cells shaped of a regular hexagon, it may not difficult to design transmission power assignment patterns with superior performance, and to assign the transmission power assignment patterns to each cell. However, as illustrated in FIG. 2, in a cellular system being comprised of irregular sized and shaped cells, it may be difficult to design superior transmission power assignment patterns and to assign the patterns to each cell because a number of adjacent cells differs at each cell.

One of the simplest schemes to design transmission power assignment patterns is to randomly assign a transmission power. When using random transmission power assignment patterns, each cell randomly generates a maximum transmission power of radio resource and thus there is no need for a complex cell planning. However, when a transmission power assignment pattern forms a specific pattern, a system performance may be deteriorated.

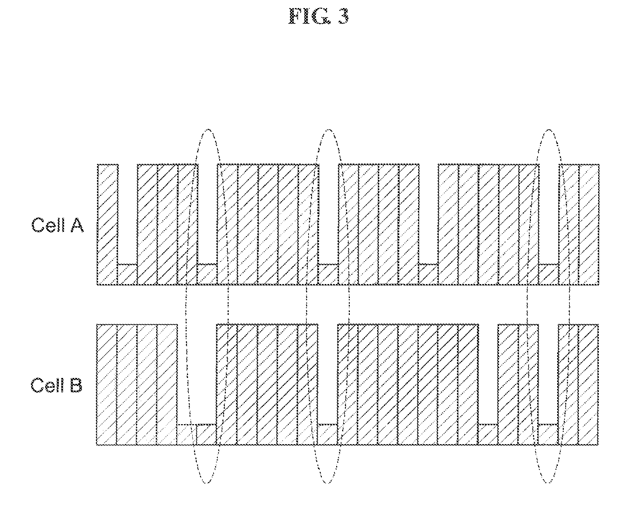

As illustrated in FIG. 3, adjacent cells A and B concurrently assign a relatively low transmission power to any radio resource group between the adjacent cells A and B. A cell adjacent to the cell A may receive relatively less interference by virtue of a sacrifice by the cell A transmitting data using the relatively low transmission power. As a result, when a user adjacent to the cell A while being included in another cell uses the radio resource group, the user may receive a relatively less interference. However, as illustrated in FIG. 3, when the cell B is required to transmit data using a relatively low transmission power, a signal to interference plus noise ratio (SINR) of a corresponding radio resource group may become poor. As a result, the cell B may not fully utilize the sacrifice of the cell A transmitting data using the low transmission power.

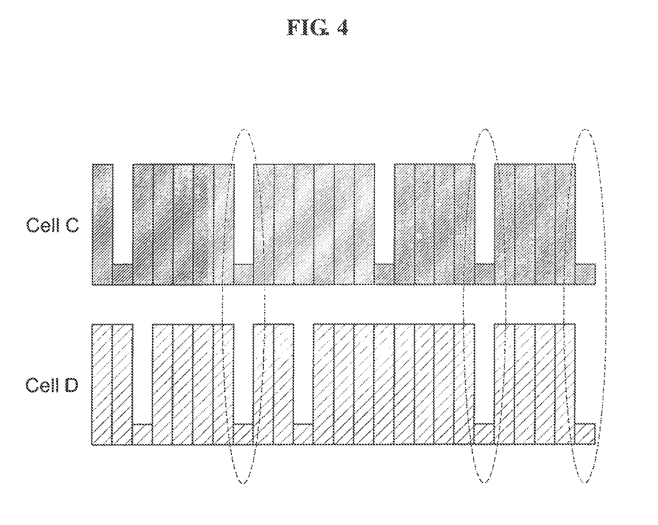

As illustrated in FIG. 3 and FIG. 4, when cells C and D are not directly adjacent to each other, and are adjacent to the cell A, the cells C and D concurrently assign a relatively low transmission power to any radio resource group. By virtue of the cells C and D using the relatively low transmission power, a user adjacent to the cells C and D may use a corresponding radio resource group because of occurrence of less interference. In this instance, in the cell A, a corresponding radio resource may be assigned to the user adjacent to the cells C and D, and the assigned corresponding radio resource may be used. Since, in the cell A, the corresponding radio resource is assigned to only one user (because, in an identical cell, an identical resource may not be concurrently assigned to different users), any one of the cell A and the cell B may sacrifice itself more than necessary.

When the cell A and all cells adjacent to the cell A assign a relatively high transmission power to the radio resource group, cooperation between the cells for avoiding interferences may not be achieved.

Disclosure of Invention

Technical Goals

An aspect of the present invention provides a method for inter-cell interference avoidance that may not require signaling between base stations and a complex cell planning.

Another aspect of the present invention also provides a method that may design a set of radio resource property patterns having small influence on a system performance to thereby prevent a performance deterioration of a cellular system without a complex cell planning.

Another aspect of the present invention provides a method of designing a set of transmission power assignment patterns in which a cell may transmit, to an adjacent cell, information about a radio resource group using a relatively low transmission power, so that the adjacent cell assigns a relatively high transmission power to the radio resource group, whereby inter-cell cooperation for avoiding interferences may be performed.

The present invention is not limited to the above purposes and other purposes not described herein will be apparent to those of skill in the art from the following description.

Technical solutions

According to an aspect of the present invention, there is provided a method for inter-cell interference management, the method including: dividing a radio resource into at least one radio resource group; generating at least one radio resource property pattern using a radio resource property; mapping the at least one radio resource property pattern and a cell ID; and using, by each cell, a radio resource according to a radio resource property pattern mapped with a cell ID of each cell.

According to another aspect of the present invention, there is provided a method for inter-cell interference management, the method including: dividing a radio resource into at least one radio resource group; assigning, to each cell, a set of the at least one radio resource group using a low transmission power; transmitting by a cell, to all adjacent cells, a radio resource group list using a cell ID of the cell and the low transmission power; and determining which of the at least one radio resource group is assigned to use a high transmission power in accordance with the transmitted radio resource group list.

Specific aspects of embodiments will be included in the detailed description and the accompanying drawings.

Additional aspects and features of the invention and the achieving methods thereof will be set forth in part in the description which follows and, in part, will be apparent from the description and the accompanying drawings. However, the present invention is not limited by following embodiments and may be embodied into various types. The embodiments are provided to complete the disclosure of the invention and inform those skilled in the art of the scope of the invention. The invention is defined by the claims, wherein like reference numerals refer to the like elements throughout.

Advantageous effects

As described above, according to the present invention, there is provided a method for inter-cell interference avoidance that may not require signaling between base stations and a complex cell planning.

Also, according to the present invention, there is provided a method for inter-cell interference management that may very uniformly perform inter-cell coordination for interference avoidance without a complex cell planning, by designing and using a set of radio resource property patterns having small influence on a system performance, when assigning the radio resource property patterns to cells.

Also, according to the present invention, there is provided a method for inter-cell interference management, in which a cell may transmit, to an adjacent cell, information about a radio resource group using a relatively low transmission power, so that the adjacent cell assigns a relatively high transmission power to the radio resource group, whereby inter-cell cooperation for avoiding interferences may be performed.

Brief Description of Drawings

FIG. 1 illustrates a cell configuration of a regular hexagonal cellular system being comprised of identical sized and shaped cells;

FIG. 2 illustrates a cell configuration of a typical cellular system;

FIG. 3 illustrates a channel state in which performance deterioration occurs in a cellular system using a random transmission power assignment pattern;

FIG. 4 illustrates another channel state in which performance deterioration occurs in a cellular system using a random transmission power assignment pattern;

FIG. 5 illustrates a channel state of a cell in FIG. 1;

FIG. 6 illustrates a channel state of another cell in FIG. 1;

FIG. 7 illustrates a channel state of still another cell in FIG. 1;

FIG. 8 is a flowchart illustrating a method for inter-cell interference management without a cell planning according to example embodiments;

FIG. 9 illustrates transmission power assignment patterns 0, 3, 6, and 12 in a case of G=5 and F=1;

FIG. 10 is a flowchart illustrating a method for intet-cell interference management without a cell planning according to other example embodiments;

FIG. 11 illustrates a channel state of each cell in which transmission power assignment patterns are used in a cellular system according to example embodiments; and

FIG. 12 illustrates a channel state of each cell in a case of using a method for inter-cell interference management according to other example embodiments.

Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

Hereinafter, embodiments of the present invention will be described with reference to the accompanying drawings. When it is determined detailed description related to a known function or configuration they may render the purpose of the present invention unnecessarily ambiguous in describing the present invention, the detailed description will be omitted here.

A basic unit assigning a data channel to a user in the cellular system may be referred to as a radio resource, and a subset of at least one radio resources may be referred to as a radio resource group, G radio resource groups may exist in the cellular system.

Each cell may use each radio resource by using a different scheme for inter-cell interference management.

For example, each cell may set maximum allowable transmission power to be different for each radio resource. Specifically, it is possible to limit a maximum transmission power of a g-th radio resource group to $P_g$.

Accordingly, when assigning the maximum transmission powder to each radio resource group, each cell may obtain a G-dimensional vector such as $\mathbf{P}=(P_1,P_2,...,P_g,...,P_G)$.

Here, the G-dimensional vector may be referred to as a transmission power assignment pattern.

An inter-cell interference avoidance scheme using controlling of the maximum transmission power may have a unique set $\mathbf{S}= \{\mathbf{P}_1,\mathbf{P}_2,...,\mathbf{P}_N\}$ of transmission power assignment patterns, and may assign, to each cell in the system, the transmission power assignment pattern within the unique set S.

FIG.1 illustrates a cell configuration of a regular hexagonal cellular system being comprised of identical sized and shaped cells.

A cellular system in accordance with a conventional interference avoidance scheme may use a set of transmission power assignment patterns such as $P_{Tx}^{H} > P_{Tx}^{L}$ and

$$\mathbf{S} = \left\{ \mathbf{P}_1 = \left( P_{Tx}^{H}, P_{Tx}^{L}, P_{Tx}^{H} \right), \mathbf{P}_2 = \left( P_{Tx}^{L}, P_{Tx}^{H}, P_{Tx}^{H} \right), \mathbf{P}_3 = \left( P_{Tx}^{H}, P_{Tx}^{H}, P_{Tx}^{L} \right) \right\}.$$

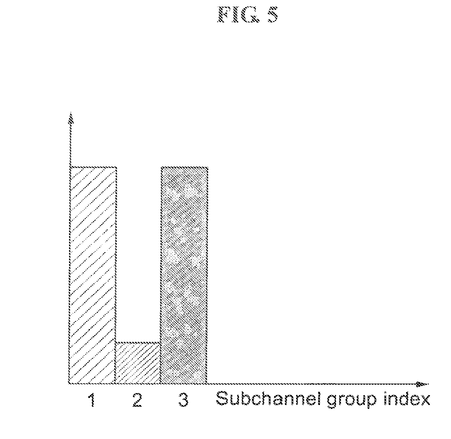

The cellular system in accordance with the interference avoidance scheme may assign a pattern $\mathbf{P}_1$ to a cell A, and as illustrated in FIG. 5, assign a high transmission power to radio resource groups 1 and 3 and a low transmission power to a radio resource group 2.

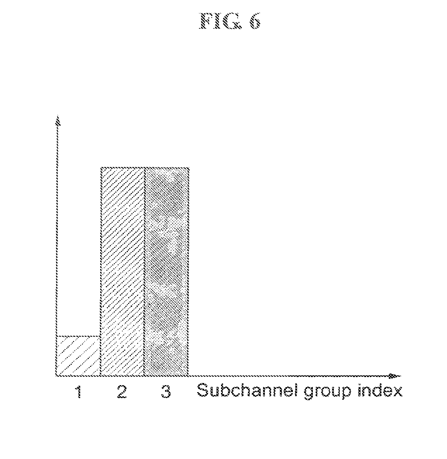

The cellular system in accordance with the interference avoidance scheme may assign a pattern $\mathbf{P}_2$ to cells B, D, and F, and as illustrated in FIG. 6, assign a high transmission power to radio resource groups 2 and 3 and a low transmission power to a radio resource group 1.

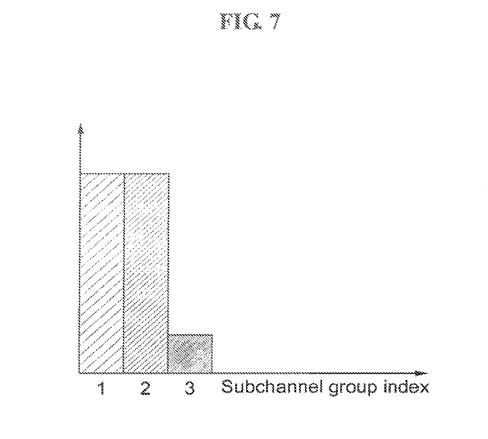

The cellular system in accordance with the interference avoidance scheme may assign a pattern $\mathbf{P}_3$ to cells C, E, and G, and as illustrated in FIG. 7, assign a high transmission power to radio resource groups 1 and 2 and a low transmission power to a radio resource group 3.

In the cellular system in accordance with the interference avoidance scheme, when a user adjacent to a cell B while being included in the cell A communicates using radio resources of the radio resource group 1 of the cell A, the user may be provided with a high signal to interference plus noise ratio (SINR). This is because, in the radio resources of the radio resource group 1, a transmission power of signals of the radio resources may be high, and a transmission power of interference signals is low. Accordingly, in the cellular system in accordance with the interference avoidance scheme, a radio resource group capable of being provided with a high SINR even in any cell boundary may exist.

Also, differently assigning the transmission power assignment patterns to each cell by the cellular system in accordance with the interference avoidance scheme may cause different results.

For example, when the pattern $\mathbf{P}_1$ is assigned to the cells A and D, the pattern $P_2$ is assigned to the cells C, G, and F, and the pattern $\mathbf{P}_3$ is assigned to the cells B and F, the radio resource groups 1 and 3 having a high transmission power of their own signals may also have a high transmission power of the interference signals, and thus a user existing in a boundary of the cells A and D does not have a radio resource group providing a high SINR, just like a case where the pattern $\mathbf{P}_1$ is assigned to the cell A, the pattern $\mathbf{P}_2$ is assigned to the cells C, D, and F, and the pattern $\mathbf{P}_3$ is assigned to the cells C, E, and G.

In addition to a transmission power control scheme, the cellular system may use each radio resource using a different scheme in various aspects for inter-cell interference management. For example, the cellular system may perform the inter-cell interference management using a scheme of controlling an allowable inter-cell interference level.

Specifically, the cellular system may assign predetermined radio resources to a user located in a cell boundary, and assign another radio resources to a user near to a serving base station.

In this instance, the radio resource assigned to the user at the cell boundary may be allowed to cause strong interference against adjacent cells, whereas the radio resource assigned to the user near to the base station may be allowed to cause only small interference against the adjacent cells.

An allowable inter-cell interference level of each radio resource may be indicated using a high interference indicator (HII) in an uplink of a 3GPP system. A value of the HII may be designed to have two steps.

Each cell of the cellular system controlling the allowable inter-cell interference level may assign a size of the allowable inter-cell interference level to each radio resource. In this instance, a pattern for the size of the allowable inter-cell interference level may be represented as a G-dimensional vector.

For the inter-cell interference management, the cellular system may assign the pattern for the size of the allowable inter-cell interference level to each cell like the aforementioned transmission power assignment pattern. The base station may use each radio resource as defined in the pattern.

In addition to the transmission power and the allowable inter-cell interference level, the cellular system may perform the inter-cell interference management using various properties of radio resources.

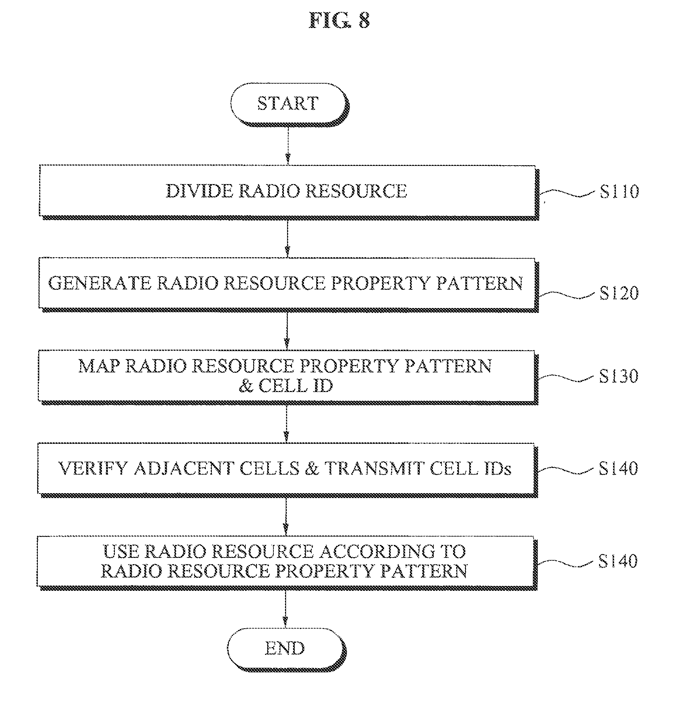

FIG. 8 is a flowchart illustrating a method for inter-cell interference management according to example embodiments.

In operation S110, a cellular system may divide all available radio resources into at least one radio resource group.

In operation S120, the cellular system may generate at least one radio resource property pattern using a radio resource property. In this instance, the radio resource property used for the radio resource property pattern may include a maximum transmission power of a radio resource or an allowable inter-cell interference level.

Also, the cellular system may use other radio resource properties required for the inter-cell interference management.

Each of the at least one radio resource property pattern may be represented by the following Table 1:

[Table 1] n-th radio resource property pattern

| Radio resource group ID | Radio resource property value |
| --- | --- |
| 0 | $A_n(0)$ |
| 1 | $A_n(1)$ |
| 2 | $A_n(2)$ |

(continued)

| Radio resource group ID | Radio resource property value |
|---|---|
| . . . | . . . |
| . . . | . . . |
| G | $A_n(G)$ |

In operation S120, when a value of the radio resource property has only two steps, the cellular system may generate the at least one radio resource property pattern using a mutually orthogonal Latin square matrix.

For example, when the transmission power of the radio resource is classified into two steps, for example, high and low, the cellular system may generate the at least one radio resource property pattern based on the mutually orthogonal Latin square matrix,

Specifically, it is assumed that a number of radio resource groups is $G^2$, and G denotes a prime number p or an n-th power of the prime number p and thus may be represented by $G=p^n$ using the prime number p and natural number n.

Also, when a G-dimensionai Latin square matrix is assumed, values from '0' to 'G-1' may not be duplicated in each row and column of the G-dimensional Latin square matrix, and a number of mutually orthogonal G-dimensional Latin square matrices is G-1.

When G-1 mutually orthogonal Latin square matrices are $\mathbf{L}^0, \mathbf{L}^1, ..., \mathbf{L}^{G-2}$, and $\mathbf{L}_k^g$ is a k-th column of a g-th mutually orthogonal Latin square matrix, a case where an identical number exists at an identical location of two vectors $\mathbf{L}_{k_1}^{g_1}$ and $\mathbf{L}_{k_2}^{g_2}$, with respect to all $g_1$, $g_2$ and $k_1$, $k_2$ satisfying $g_1 \neq g_2$ may be always only one case exists.

The below matrices are examples of mutually orthogonal Latin square matrices in a case of G= 5.

$$\mathbf{L}^0 = \begin{bmatrix} 0 & 1 & 2 & 3 & 4 \\ 1 & 2 & 3 & 4 & 0 \\ 2 & 3 & 4 & 0 & 1 \\ 3 & 4 & 0 & 1 & 2 \\ 4 & 0 & 1 & 2 & 3 \end{bmatrix}, \quad \mathbf{L}^1 = \begin{bmatrix} 0 & 1 & 2 & 3 & 4 \\ 2 & 3 & 4 & 0 & 1 \\ 4 & 0 & 1 & 2 & 3 \\ 1 & 2 & 3 & 4 & 0 \\ 3 & 4 & 0 & 1 & 2 \end{bmatrix},$$

$$\mathbf{L}^2 = \begin{bmatrix} 0 & 1 & 2 & 3 & 4 \\ 3 & 4 & 0 & 1 & 2 \\ 1 & 2 & 3 & 4 & 0 \\ 4 & 0 & 1 & 2 & 3 \\ 2 & 3 & 4 & 0 & 1 \end{bmatrix}, \quad \mathbf{L}^3 = \begin{bmatrix} 0 & 1 & 2 & 3 & 4 \\ 4 & 0 & 1 & 2 & 3 \\ 3 & 4 & 0 & 1 & 2 \\ 2 & 3 & 4 & 0 & 1 \\ 1 & 2 & 3 & 4 & 0 \end{bmatrix}$$

When defining $(G-1) \times G$ numbered-$G^2$-dimensional vector $\mathbf{V}_{g,k}$, using a G-1 numbered-mutually orthogonal Latin square matrix, value $\mathbf{V}_{g,k}(q)$ of a q-th row of a vector $\mathbf{V}_{g,k}$, may be calculated by Equation 1 below to generate a $G^2$- dimensional vector using each column of the G-1 numbered-mutually orthogonal Latin square matrices.

[Equation 1]

$$\mathbf{v}_{g,k}(q) = \begin{cases} 1 & \text{if } G \times j + \mathbf{L}_k^g(j) \neq q, \quad \text{for all } 0 \leq j < G \\ 0 & \text{otherwise.} \end{cases}$$

In this instance, $\mathbf{L}_k^g(j)$ is a j-th row of a vector $\mathbf{L}_k^g$, $0 \leq g < (G-1)$, $0 \leq k < G$, and $0 \leq q < G^2$.

For example, in a case of G=5, a vector using an 0-th column of $\mathbf{L}^1$ is $V_{1,0}$. In this instance, since $\mathbf{L}_0^1(0) = 0$, $G*j + \mathbf{L}_k^g(j) = 5*0+0=0$ from $\mathbf{v}_{1,0}(0)$, $G*j + \mathbf{L}_k^g(j) = 5*0+0 \neq 1$ from $\mathbf{v}_{1,0}$ (1), $G*j + \mathbf{L}_k^g(j) = 5*0+0 \neq 2$ from $\mathbf{v}_{1,0}(2)$, $G*j + \mathbf{L}_k^g(j) = 5*0+0 \neq 3$ from $\mathbf{v}_{1,0}$ (3), and $G*j + \mathbf{L}_k^g(j) = 5*0+0 \neq 4$ from $\mathbf{v}_{1,0}$ (4). Accordingly, from among '0' to '4' elements of $\mathbf{v}_{1,0}$, only a '0' element is '0', and the remaining elements 1, 2, and 3 may be '1'.

Also, since $\mathbf{L}_0^1(1) = 2$, $G*j + \mathbf{L}_k^g(j) = 5*1+2=7$ from $\mathbf{v}_{1,0}$ (7), $G*j + \mathbf{L}_k^g(j) = 5*1+2 \neq 5$ from $\mathbf{v}_{1,0}$ (5), $G*j + \mathbf{L}_k^g(j) = 5*1+2 \neq 6$ from $\mathbf{v}_{1,0}$ (6), $G*j + \mathbf{L}_k^g(j) = 5*1+2 \neq 8$ from $\mathbf{v}_{1,0}$ (8), and $G*j + \mathbf{L}_k^g(j) = 5*1+2 \neq 9$ from $\mathbf{v}_{1,0}$ (9). Accordingly, from among '5' to '9' elements of $\mathbf{v}_{1,0}$, only a '7' element is '0', and the remaining elements 5, 6, 8, and 9 may be '1'.

The cellular system may generate the transmission power assignment, patterns using a $(G-1) \times G$ numbered-$G^2$-dimensional vector $\mathbf{v}_{g,k}$ that is obtained by the above-described method.

As a variable affecting the transmission power assignment pattern, a ratio ρ of a number of radio resource groups using a high transmission power to a number of radio resource groups using a low transmission power may be given. In this instance, ρ may have a type of F/G, and F is a natural number smaller than G.

The cellular system, in a case of F=1, may generate $(G-1) \times G$ transmission power assignment patterns, $\mathbf{P}_h$, to correspond to Equation 2 below, which is represented as

[Equation 2]

$$\mathbf{P}_h(q) = \begin{cases} P_{Tx}^L & \text{if } \mathbf{v}_{\lfloor h/G \rfloor, h \bmod G}(q) = 0, \\ P_{Tx}^H & \text{otherwise.} \end{cases}$$

In this instance, $0 \leq h < (G-1) \times G$, and the transmission power assignment pattern $\mathbf{P}_h$ may be generated by $\mathbf{V}_{\lfloor h/G \rfloor, h \bmod G}$ in which g is h/G and k is h mod G from the vector $\mathbf{V}_{g,k}$ generated to correspond to Equation 1.

The cellular system may assign a low transmission power $P_{Tx}^L$ when a q-th row of $\mathbf{V}_{[h/G]}$, h mod G is '0', and also assign a high transmission power $P_{Tx}^H$ when the q-th row of $V_{[h/G]}$, h mod G is '1'.

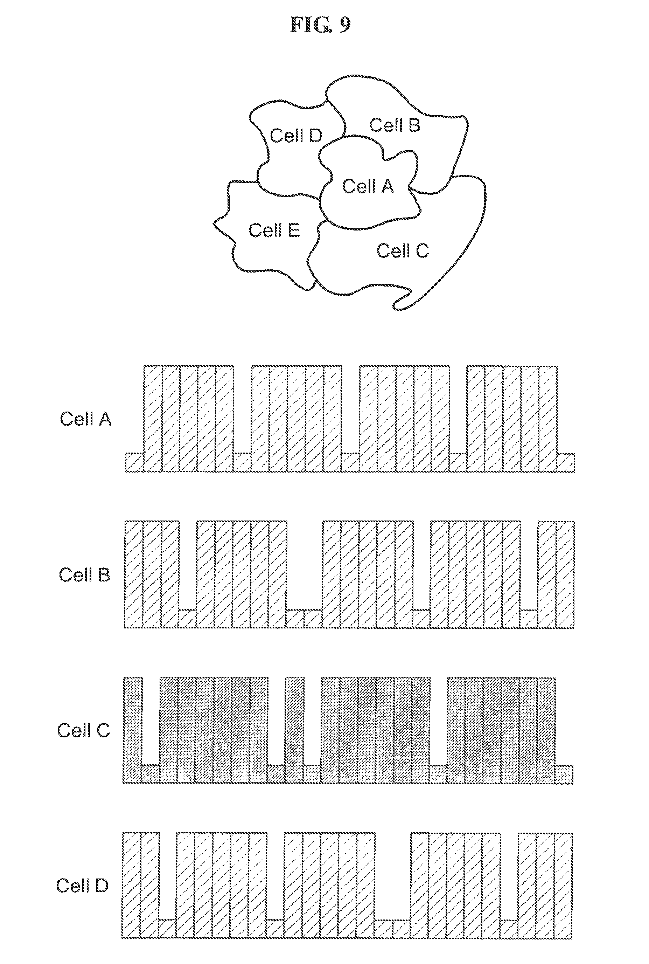

FIG. 9 illustrates transmission power assignment patterns 0, 3, 6, and 12 in a case of G=5 and F=1.

The cellular system, in a case of F#1, may set an arbitrary permutation $\mathscr{P}$ of an ordered pair set {(g, k-)|0≤g<

(*G*-1), 0≤*k*<*G*}, and set an n-th ordered pair $\mathscr{P}(n)$ of the permutation $\mathscr{P}$ as ($g_n$, $k_n$) to thereby generate the transmission power assignment patterns to correspond to Equation 3 below.

In this instance, as for the permutation $\mathscr{P}$, a specific permutation $\mathscr{P}$ is not needed as a precondition, and any permutation $\mathscr{P}$ may be applicable.

[Equation 3]

$$\mathbf{P}_h\left(q\right) = \begin{cases} P_{Tx}^L & \text{if } \prod_{i=0}^{F-1} \mathbf{v}_{g_{h\times F+i},\,k_{h\times F+i}} = 0, \\ \\ P_{Tx}^H & \text{otherwise.} \end{cases}$$

In this instance, $0 \le h < \left\lfloor \dfrac{G \times (G-1)}{F} \right\rfloor$, and the transmission power assignment pattern $\mathbf{P}_h$ may be generated to correspond to vectors $V_{g h\times F,\ k_{h\times F}}$, $\mathbf{V}_{g h\times F+1,\ k_{h\times F+1}}$,...., $\mathbf{V}_{g h\times F+F-1,\ k_{h\times F+F-1}}$.

The cellular system may assign a low transmission power $P_{Tx}^L$ to a q-th radio resource group when a value of a q-th row of some vectors among F numbered-vectors $\mathbf{V}_{g h\times F,k_{h\times F}}$, $\mathbf{V}_{g h\times F+1,k_{h\times F+1}}$,...., $\mathbf{V}_{g h\times F+F-1,k_{h\times F+F-1}}$ is '0', and also assign a high transmission power $P_{Tx}^H$ to the q-th radio resource group when a value of all of the F-numbered vectors is '1'.

Referring again to FIG. 8, in operation S130, the cellular system may map radio resource property patterns to cell IDs as shown in the following Table 2, Here, the cell ID may be a physical-layer cell identity.

[Table 2] Mapping of radio resource property pattern

| Cell ID | Radio resource property pattern ID |
|---------|-----------------------------------|
| 0 | **P**(0) |
| 1 | **P** (1) |
| 2 | **P**(2) |
| . . . | . . . |
| . . . | . . . |
| M | **P**(M) |

In this instance, M denotes a number of cell IDs, and **P**(*m*) denotes an ID of a radio resource property pattern assigned to a cell having 'm' as the cell ID. Specifically, the cell having 'm' as the cell ID may use radio resources according to the radio resource property pattern defined by **P** (*m*),

In operation S140, terminals included in the cellular system may search for signals from adjacent cells and transmit, to the base station, cell IDs of adjacent cells that are obtained from the signals.

The terminals of the cellular system may transmit the cell IDs and a received signal strength.

In operation S150, each of the cells within the cellular system may use the radio resource according to the radio resource property pattern mapped to its own cell ID.

In operation S140, When the cell IDs of the adjacent cells are received, each of the cells within the cellular system may use the radio resource based on its assigned radio resource property pattern and information associated with the received cell IDs in operation S140.

For example, when a cell ID of a cell adjacent to a terminal A is x, a cell B including the terminal A may be aware of a radio resource property pattern of an adjacent base station based on the above Table I and Table 2.

When the adjacent cell x uses a pattern that causes much interference against a resource R and the terminal A should not receive much interference, the cell B may transmit data to the terminal A using another resource instead of assigning the resource R.

When designing transmission power assignment patterns according to an embodiment of the present invention, the following characteristics may be obtained.

A set $C(\mathscr{P})$ with respect to the permutation $\mathscr{P}$ may be defined as Equation 4 below.

[Equation 4]

In a case fo F=1,

$$C\left(\mathscr{P}\right) = \left\{ h \in Z \middle| h \geq 0, 0 \leq h < \left\lfloor \frac{G \times (G-1)}{F} \right\rfloor \right\},$$

and in a case of F> 1,

$$C\left(\mathscr{P}\right) = \left\{ h \in Z \middle| h \geq 0, g_{F \times h} = g_{F \times h+1} = \ldots = g_{F \times h+F-1}, 0 \leq h < \left\lfloor \frac{G \times (G-1)}{F} \right\rfloor \right\}.$$

Here, Z is a set of integers.

Also, a set $S(\mathscr{P})$ of the transmission power assignment patterns may be defined as Equation 5 below, using the set $C(\mathscr{P})$.

[Equation 5]

$$S\left(\mathscr{P}\right) = \left\{ \mathbf{P}_h \middle| h \in C\left(\mathscr{P}\right) \right\}.$$

According to an example embodiment, F vectors $\mathbf{V}_{g_{h \times F}, k_{h \times F}}$, $\mathbf{V}_{g_{h \times F+1}}, \ldots, \mathbf{V}_{g_{h \times F+F-1}, k_{h \times F+F-1}}$ are needed to obtain a single transmission power assignment pattern, each of the F-numbered vectors may be generated from a single column extracted from the mutually orthogonal Latin square matrices. Specifically, to obtain the single transmission power assignment pattern, F-numbered columns extracted from the mutually orthogonal Latin square matrices may be needed. The transmission power assignment patterns within the set $S(\mathscr{P})$ may be $g_{F \times h} = g_{F \times h+1} = \ldots = g_{F \times h+F-1}$, and may be generated using F-numbered columns extracted from a single Latin square matrix.

Since a case of F=1 naturally satisfies the above described condition, all transmission power assignment patterns may be included in the set $S(\mathscr{P})$,

A case where an identical number exists at an identical location of two different columns arbitrarily extracted from the mutually orthogonal Latin square matrices is non-existent, or only one case exists. Specifically, when the two different columns arbitrarily extracted from the mutually orthogonal Latin square matrices are generated from an identical Latin square matrix, the case where the identical number exists at the identical location thereof may be non-existen), and when the two different columns are generated from different Latin square matrices, the case where the identical number exists at the identical location thereof may be only one case may exist.

In this manner, a case where two selected arbitrary transmission power assignment patterns within the set $S$ ($\mathscr{P}$) concurrently assign a low transmission power to an identical radio resource group may be non-existent, or may exist with $F^2$,

When a probability in which two different transmission power assignment patterns arbitrarily extracted from the set $S(\mathscr{P})$ are generated from different mutually orthogonal Latin square matrices is η, an average value of a case of concurrently assigning a low transmission power to an identical radio resource group in the two different transmission power assignment patterns arbitrarily extracted from the set $S(\mathscr{P})$ is η×$F^2$,

In this instance, η is $\dfrac{G-2}{G-1} \leq \eta \leq 1$.

In addition, in a conventional random transmission power assignment method, an average value of radio resource groups that two transmission power assignment patterns concurrently assign a low transmission power to is represented as

[Equation 6]

$$\sum_{n=0}^{G\times F}\left( n \times \frac{_{G\times F}C_n \times {}_{G\times(G-F)}C_{G\times F-n}}{_{G\times G}C_{G\times F}}\right).$$

In this instance, a value of Equation 6 may be more than η × $F^2$.

When the transmission power assignment, pattern is designed according to an example embodiment in a case of F=1, an average value of radio resource groups that two different transmission power assignment patterns concurrently assign a low transmission power to is $\dfrac{G(G-2)}{G(G-2)+G-1}$. However, the average number in a case of using the random transmission power assignment pattern is '1',

In the random transmission power assignment pattern, performance deterioration may be generated when the two different transmission power assignment patterns concurrently assign the low transmission power to the identical radio resource group. Accordingly, when designing the transmission power assignment patterns according to the present invention, the performance deterioration may be reduced.

Also, according to an example embodiment, since identical performance may be provided even though the transmission power assignment patterns within the set $S(\mathscr{P})$ are assigned to each cell inside the system in any type, a complex cell planning may be unnecessary only by satisfying a condition that an identical transmission power assignment pattern is not assigned to adjacent two cells,

Satisfying the above-described condition may not be significantly difficult when a number of transmission power assignment patterns is more than any level, and a number of transmission power assignment patterns within $S(\mathscr{P})$ may be changeable by adjusting G and F.

As an example, in order to set a ratio ρ of a number of radio resource groups using a low transmission power to be 1/3, the value of (F,G) can be (1,3) or (3,9). In a case of (F,G) = (1,3), a number of transmission power assignment

patterns within $S(\mathcal{P})$ is 2 × 3 = 6, and in a case of (F,G) = (3,9), the number of the patterns may be $\frac{8 \times 9}{3} = 27$.

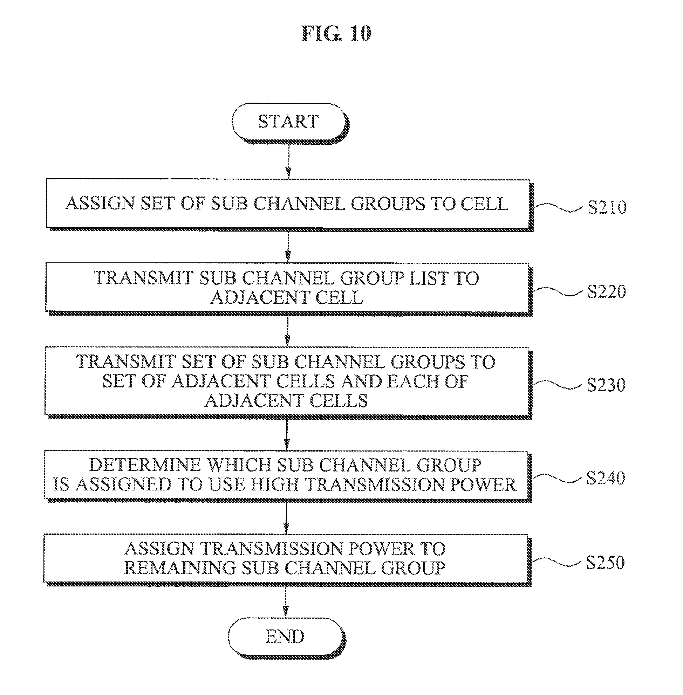

FIG. 10 is a flowchart illustrating a method for inter-cell interference management without a cell planning according to other example embodiments.

In the method for inter-cell interference management according to the present example embodiment, all cells including adjacent cells may assign a high transmission power to any radio resource group, thereby reducing a case where interference avoidance by means of an inter-cell adjustment may not occur,

In operation S210, the cellular system may assign, to each cell, a set of radio resource groups using a low transmission power, and define the set of radio resource groups using the low transmission power of a cell whose cell ID is c, as $L_c$.

In operation S210, the cellular system may use the transmission power assignment pattern generated as the mutually orthogonal Latin square matrix in operation S120, or use another transmission power assignment pattern generated in another method.

In operation S220, a cell may transmit, to all adjacent cells, a radio resource group list $L_c$ using c, that is, its own cell ID, and the low transmission power, and may define a set of the all adjacent cells as $A_c$.

In operation S230, the cell may transmit, to the all adjacent cells, the set $A_c$ and a set $\{L_d | d \in A_c\}$ of radio resource groups using the low transmission power with respect to each of the adjacent cells generated to correspond to the radio resource group list $L_c$ received from the adjacent cells in operation S220.

In operation S240, the cell may determine which of radio resource groups is transmitted to use the high transmission power by using the radio resource group list $L_c$ of each of the adjacent cells received from the adjacent cells in operation S220.

For example, when a low transmission power is used in a cell $x \in A_c$ adjacent to a c-th cell with respect to any radio resource group, the c-th cell may desirably assign a corresponding radio resource group to terminals of a cell adjacent to a cell x. Accordingly, the cell c may assign the high transmission power to the corresponding radio resource group.

In operation S240, the cell may define a set of channels to which the high transmission power is assigned to the cell as $H_c$.

In operation S250, the cell may assign the high transmission power or the low transmission power to each of remaining radio resources not being included in $L_c$ and $H_c$ using the cell ID.

When operation S250 is terminated, the cell may finish the transmission power assignment with respect to all radio resource groups of the cell, and complete transmission power assignment pattern of adjacent cells adjacent to the cell may be known.

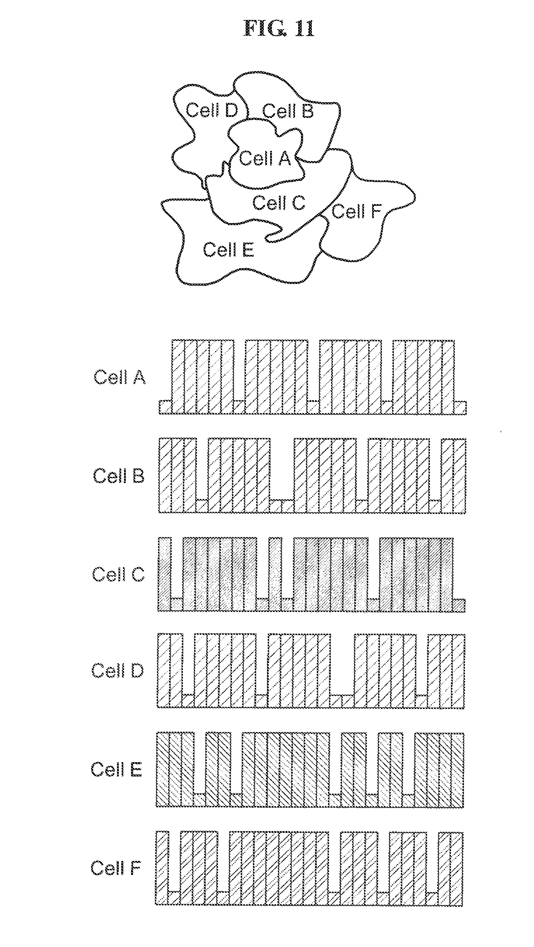

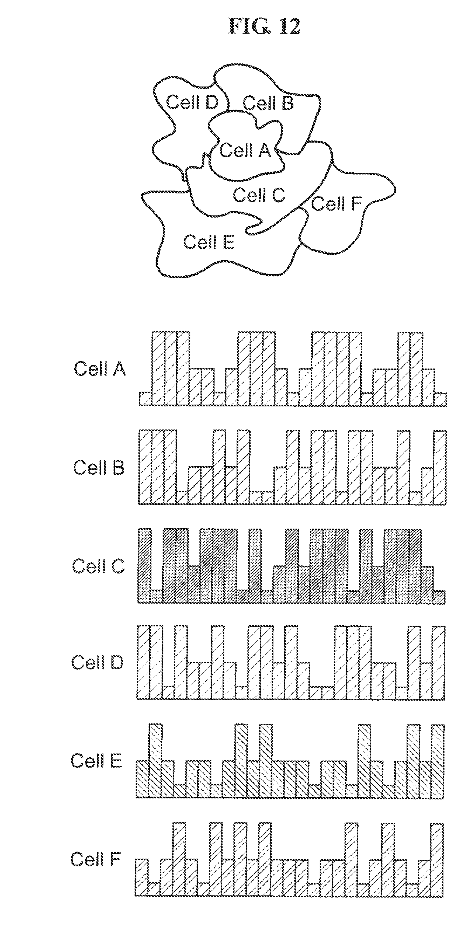

The method for inter-cell interference management according to the present example embodiment, as illustrated in FIG. 11, for the transmission power assignment pattern of the cell C, the high transmission power may be assigned to 0-th, 2-th, 3-th, 4-th, 5-th, 6-th radio resources. In a case of 0-th radio resource, since the adjacent cell A transmits a corresponding radio resource group using the low transmission power, the cell C may desirably assign, to a user adjacent to the cell A while being included in the cell C, a corresponding channel. However, in the second, fourth, and fifth radio resource groups, all adjacent cells are assigned using the high transmission power, thereby preventing a case where the interference avoidance by means of the inter-cell adjustment may not occur. The transmission power assignment pattern as illustrated in FIG. 1may be changed to that in FIG. 12 when the method for inter-cell interference management according to the present example embodiment is applicable. In this instance, in FIG. 12, a middle size of transmission power may designate a state where the transmission power is not assigned.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

**Claims**

1.  A method for inter-cell interference management, the method comprising:

    dividing radio resources into multiple radio resource groups;
    generating multiple radio resource property patterns using a radio resource property;
    mapping the radio resource property pattern to cell IDs; and
    using, by each cell, radio resources according to a radio resource property pattern mapped to a cell ID of each cell.

2. The method of claim 1, wherein the radio resource property used for the radio resource property patterns includes a maximum transmission power of the radio resource or an allowable inter-cell interference level.

3. The method of claim 1, further comprising:

   searching, by terminals, for signals from adjacent cells to transmit cell IDs of the retrieved adjacent cells to a base station.

4. The method of claim 3, wherein the searching and the transmitting transmits the cell IDs and a received signal strength from the retrieved adjacent cells,

5. The method of claim 1, wherein the generating generates the multiple radio resource property patterns using mutually orthogonal Latin square matrix.

6. The method of claim 5, wherein a number of the divided radio resource groups is $G^2$, wherein G is a prime number p or an n-th power of the prime number p.

7. The method of claim 6, wherein the generating includes:

   defining a $(G - 1) \times G$ numbered- $G^2$ -dimensional vector using G-1 numbered-mutually orthogonal Latin square matrices; and
   generating a transmission power assignment pattern in accordance with the $G^2$ - dimensional vector.

8. The method of claim 7, wherein the defining defines the $G^2$ -dimensional vector based on Equation 1, which is represented as

[Equation 1]

$$V_{g,k}(q) = \begin{cases} 1 & \text{if } G \times j + L_k^g(j) \neq q, \text{ for all } 0 \leq j < G \\ 0 & \text{otherwise} \end{cases}$$

wherein $L_k^g$ represents a k-th column of a g-th mutually orthogonal Latin square matrix, and $L_k^g(j)$ represents a j-th row of a $L_k^g$ vector, wherein $0 \leq g < (G-1)$, and $0 \leq k < G$, and $0 \leq q < G^2$.

9. The method of claim 7, wherein when a product of a ratio ρ and G is '1', the ratio ρ being of a number of radio resource groups using a low transmission power to a number of radio resource groups using a high transmission power, and the generating generates the transmission power assignment pattern based on Equation 2, which is represented as

[Equation 2]

$$P_h(q) = \begin{cases} P_{Tx}^L & \text{if } V_{[h/G],h \bmod G}(q) = 0, \\ P_{Tx}^H & \text{otherwise} \end{cases},$$

wherein $0 \le h < (G-1) \times G$, and $V_{[h/G]}$, $h \bmod G$ represents a vector in which a value of g in a vector $V_{g,k}$ is h/G, and a value of k is h mod G,

10. The method of claim 7, wherein the generating generates the transmission power assignment pattern based on Equation 3, which is represented as

[Equation 3]

$$P_h(q) = \begin{cases} P_{Tx}^L & \text{if } \prod_{}^{F-1} v_{g_{h \times F + i}, k_{h \times F + i}} = 0, \\ P_{Tx}^H & \text{otherwise} \end{cases},$$

wherein F represents a natural number smaller than G, and is a product of a ratio p and G, the ratio $\rho$ being of a number of radio resource groups using a low transmission power to a number of radio resource groups using a high transmission power, wherein $0 \le h < \left\lfloor \dfrac{G \times (G-1)}{F} \right\rfloor$.

11. The method of claim 6, wherein a number of the generated transmission power patterns is less than or equal to a value obtained by dividing $(G-1) \times G$ by a product of a ratio and G, the ratio being of a number of radio resource groups using a low transmission power to a number of radio resource groups using a high transmission power.

12. A method for inter-cell interference management, the method comprising:

dividing a radio resource into at least one radio resource group;
assigning, to each cell, a set of the at least one radio resource group using a low transmission power;
transmitting by a cell, to all adjacent cells, a radio resource group list using a cell ID of the cell and the low transmission power; and
determining which of the at least one radio resource group is assigned to use a high transmission power in accordance with the transmitted radio resource group list.

13. The method of claim 12, wherein the assigning assigns, to each cell, the set of the at least one radio resource group using the low transmission power by utilizing a transmission power assignment pattern that is generated using a mutually orthogonal Latin square matrix.

14. The method of claim 12, wherein the assigning defines a set of radio resources using the low transmission power of each cell according to a cell ID function.

**15.** The method of claim 12, wherein, when a cell adjacent to a specific cell uses the low transmission power with respect to a specific radio resource group in the determining, the specific cell assigns a high transmission power to the specific radio resource group.

**16.** The method of claim 12, further comprising:

assigning a transmission power to unassigned radio resource groups, when the radio resource groups do not use the low transmission power and are unassigned to use a high transmission power in the determining.

**17.** The method of claim 16, wherein the assigning of the transmission power assigns, to the unassigned radio resource groups, the high transmission power or the low transmission power using the cell ID.

FIG. 1

FIG. 2

FIG. 3

Cell A

Cell B

FIG 4

FIG. 5

FIG. 6

FIG 7

FIG. 8

START

DIVIDE RADIO RESOURCE — S110

GENERATE RADIO RESOURCE PROPERTY PATTERN — S120

MAP RADIO RESOURCE PROPERTY PATTERN
& CELL ID — S130

VERIFY ADJACENT CELLS & TRANSMIT CELL IDs — S140

USE RADIO RESOURCE ACCORDING TO
RADIO RESOURCE PROPERTY PATTERN — S140

END

## FIG. 9

## FIG. 10

```
                         ┌─────────────┐
                         │    START    │
                         └──────┬──────┘
                                │
                                ▼
    ┌──────────────────────────────────────────────────┐
    │  ASSIGN SET OF SUB CHANNEL GROUPS TO CELL          │  ─── S210
    └──────────────────────────┬───────────────────────┘
                                │
                                ▼
    ┌──────────────────────────────────────────────────┐
    │     TRANSMIT SUB CHANNEL GROUP LIST TO             │  ─── S220
    │              ADJACENT CELL                         │
    └──────────────────────────┬───────────────────────┘
                                │
                                ▼
    ┌──────────────────────────────────────────────────┐
    │   TRANSMIT SET OF SUB CHANNEL GROUPS TO            │
    │     SET OF ADJACENT CELLS AND EACH OF             │  ─── S230
    │             ADJACENT CELLS                         │
    └──────────────────────────┬───────────────────────┘
                                │
                                ▼
    ┌──────────────────────────────────────────────────┐
    │    DETERMINE WHICH SUB CHANNEL GROUP               │
    │  IS ASSIGNED TO USE HIGH TRANSMISSION POWER        │  ─── S240
    └──────────────────────────┬───────────────────────┘
                                │
                                ▼
    ┌──────────────────────────────────────────────────┐
    │      ASSIGN TRANSMISSION POWER TO                  │  ─── S250
    │       REMAINING SUB CHANNEL GROUP                  │
    └──────────────────────────┬───────────────────────┘
                                │
                                ▼
                         ┌─────────────┐
                         │     END     │
                         └─────────────┘
```

## FIG. 11

Cell A

Cell B

Cell C

Cell D

Cell E

Cell F

FIG. 12